# EUROPÄISCHE PATENTSCHRIFT

(11) **EP 3 093 633 B1**
(45) Veröffentlichungstag und Bekanntmachung des Hinweises auf die Patenterteilung: **09.09.2020**
(21) Anmeldenummer: 16167031.0
(22) Anmeldetag: 26.04.2016
(51) Int. Cl.: G01J 1/04, G01J 5/04, G01J 5/00, G01J 5/08, G01J 5/02, G01J 1/02, G01J 5/06, G01J 5/34, G01J 5/60, G01J 3/36

(54) **VORRICHTUNG ZUR GLEICHZEITIGEN BESTIMMUNG MEHRERER UNTERSCHIEDLICHER STOFFE UND/ODER STOFFKONZENTRATIONEN**
APPARATUS FOR THE SIMULTANEOUS DETECTION OF A PLURALITY OF DISTINCT MATERIALS AND/OR SUBSTANCE CONCENTRATIONS
DISPOSITIF DE DETERMINATION SIMULTANEE DE PLUSIEURS MATIERES DIFFERENTES ET/OU CONCENTRATIONS DE MATIERE

(30) Priorität: 11.05.2015 DE 102015208701
(43) Veröffentlichungstag der Anmeldung: 16.11.2016
(73) Patentinhaber: InfraTec GmbH, 01217 Dresden (DE)
(72) Erfinder: Ebermann, Martin, 01796 Pirna (DE)
(74) Vertreter: Pfenning, Meinig & Partner mbB

(56) Entgegenhaltungen:
- EP-A1- 0 913 675
- EP-A1- 1 239 270
- EP-A1- 2 284 904
- WO-A1-2008/145354
- DE-C1- 19 835 335
- US-A- 4 722 612
- US-A- 5 041 723
- US-A- 5 214 494
- US-A1- 2009 160 998
- US-A1- 2012 257 075

## Beschreibung

Die Erfindung betrifft eine Vorrichtung zur gleichzeitigen Bestimmung unterschiedlicher Stoffe und/oder Stoffkonzentrationen und/oder der Beschaffenheit von Feststoffen bzw. deren Oberfläche. Unterschiedliche Stoffe können dabei zeitgleich in unterschiedlichen Spektralbereichen optisch analysiert werden. Die Vorrichtung kann dabei für die Bestimmung von in Gemischen mit anderen Stoffen enthaltenen Gasen, wie z.B. Methan, Kohlendioxid, Kohlenmonoxid, Stickstoff aber auch höher molekularer chemischer Verbindungen eingesetzt werden.
Die Vorrichtung ist ebenso zur Detektion von Flammen bzw. Bränden geeignet, wobei die spektrale Zusammensetzung der durch die Flamme emittierten Strahlung ausgewertet wird.

Zur Analyse von Stoffen und Stoffkonzentrationen in Gemischen werden zunehmend infrarot-optische Verfahren eingesetzt. Die stoffspezifischen Absorptionsbanden hinterlassen bei polychromatischer Durchstrahlung der Probe vorwiegend im infraroten Wellenlängenbereich eine charakteristische spektrale Zusammensetzung der Strahlung. Neben aufwendigen und teuren Gitter-Spektrometern und Fourier-Transform-Spektrometern werden Photometer für spektrale Messungen im nahen bis fernen Infrarotbereich benutzt. Mittels spezieller schmalbandiger Bandpassfilter werden definierte Bereiche aus dem Gesamtspektrum herausgefiltert und für die Messung der stoffspezifischen Eigenschaften verwendet.

Um die Probe zu durchstrahlen, werden meist thermische Emitter (z.B. Glühlämpchen) benutzt, die vorwiegend durch eine Modulation der elektrischen Eingangsleistung (Pulsen) betrieben werden. Als Strahlungsempfänger werden überwiegend thermische Detektoren, wie Thermopiles oder pyroelektrische Detektoren eingesetzt. Bei diesen führt die einfallende Strahlung durch Absorption zunächst zu einer Temperaturerhöhung des Detektorelements, die schließlich in ein elektrisch auswertbares Signal umgewandelt wird.

Bei pyroelektrischen Detektoren besteht das Detektorelement aus einem pyroelektrischen Kristall, wie beispielsweise Lithiumtantalat, der bei einer Temperaturänderung eine Änderung der spontanen Polarisation erfährt. Das Detektorelement ist als dünner Chip ausgeführt, der an seiner Ober- und Unterseite mit elektrisch leitfähigen Elektroden beschichtet ist. Die Änderung der Polarisation im Kristallmaterial führt zu einem Verschiebungsstrom, der als elektrische Spannungsänderung oder als elektrischer Stromfluss an den Elektroden ausgewertet werden kann. Um die Strahlungsabsorption zu erhöhen, kann die der Strahlung zugewandte Seite des Elements zusätzlich mit einer absorbierenden Schicht versehen sein. Um eine hohe Empfindlichkeit des Detektors zu erreichen, muss das Detektorelement möglichst dünn sein und eine geringe Wärmekapazität besitzen, weil sich dadurch eine große Temperaturänderung bei Bestrahlung ergibt.

Das beschriebene Wirkprinzip pyroelektrischer Detektoren bedingt, dass sie nur Änderungen der Temperatur bzw. der einfallenden Strahlung detektieren können. Daher ist ein modulierter Betrieb der Strahlungsquelle, wie oben beschrieben, zwingend erforderlich. Ein gepulster Betrieb der Strahlungsquelle ist jedoch nur bei niedrigen Frequenzen von einigen Hertz bis maximal 100 Hertz möglich. Aus diesem Grund soll die Empfindlichkeit der Detektoren insbesondere bei niedrigen Frequenzen möglichst hoch sein. Um dies zu erreichen, müssen die Detektorelemente möglichst gut thermisch isoliert angeordnet sein, damit der Wärmeausgleich mit dem Gehäuse bzw. der Umgebung möglichst langsam stattfindet. Die Anordnung besitzt dann eine hohe thermische Zeitkonstante. Dies wird dadurch erreicht, dass das Detektorelement nur an wenigen punktförmigen Stellen mit dem umgebenden Sensoraufbau bzw. Gehäuse verbunden ist. Das Sensorgehäuse kann mit Luft oder einem anderen Gas gefüllt oder auch evakuiert sein. Ein ausreichend großer Abstand des Sensorelements zum den übrigen Komponenten des Sensoraufbaus verhindert weiterhin, dass ein schneller Temperaturausgleich durch die umgebenden Gasschicht stattfindet kann.

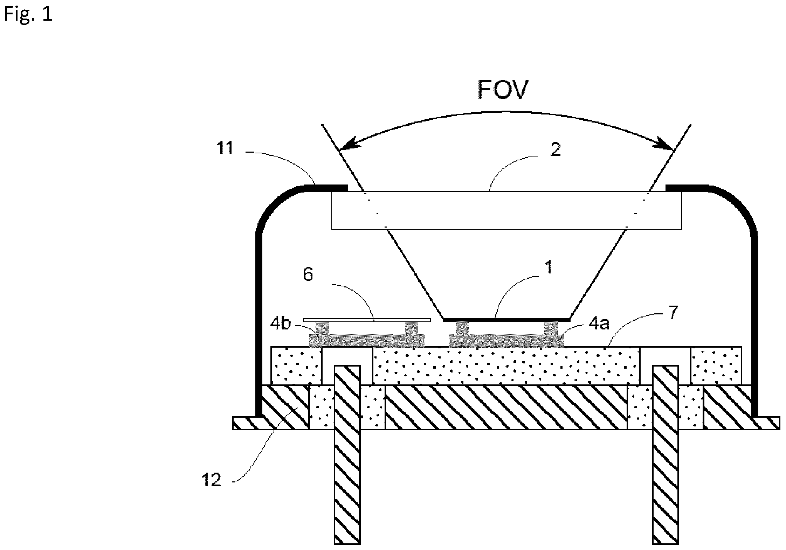

Aus dem Stand der Technik sind verschiedene Ausführungsformen bekannt. Im einfachsten Fall wird das Detektorelement direkt auf einem Verdrahtungsträger (z.B. einer Leiterplatte) montiert, wobei dieser eine entsprechend gro-βe Öffnung unterhalb des Detektorelements aufweist. Dadurch wird eine ausreichend dicke Gasschicht ober- und unterhalb des Elements realisiert. Eine weitere Ausführungsform besteht in der Verwendung eines zusätzlichen Trägers mit kleinen Auflagepunkten, der durch geeignete Materialwahl und Gestaltung seiner Form mit einer geringen Wärmeableitung ausgebildet ist (DE 10 2005 001 966 B4) (Figur 1). Der Träger ist wiederum auf einem Verdrahtungsträger montiert oder in sonstiger Art und Weise mit dem Sensorgehäuse verbunden. In einer dritten Ausführungsform wird das Detektorelement auf dünnen Aluminium- oder Golddrähten gelagert, die gleichzeitig die elektrische Kontaktierung herstellen (US 4,218,620 A).

Zusätzlich ist meist ein geeigneter elektrischer Verstärker in das Gehäuse integriert, der mit den Elektroden des Detektorelements elektrisch leitend verbunden ist und das Sensorsignal an den äußeren Anschlüssen des Sensorgehäuses bereitstellt. Das Sensorgehäuse weist zudem ein Fenster oberhalb des Detektorelements auf, durch das die zu messende Strahlung einfällt.

Um eine substanzspezifische Messung durchführen zu können, wird die Strahlung durch schmalbandige optische Filter spektral begrenzt, wobei die Durchlasswellenlänge der Filter auf die jeweilige zu messende Substanz abgestimmt ist. Für die Messung einer einzelnen Substanz sind also mindestens ein Filter und ein dazugehöriger Detektor notwendig. Um eine kompakte Bauform zu erreichen, wird das Filter meist in das Gehäuse integriert. Die häufigste anzutreffende Ausführungsform hierfür besteht darin, dass das Filter direkt in oder auf der Fensteröffnung des Gehäuses befestigt ist. Die Verbindung wird in der Regel stoffschlüssig durch Kleben oder Löten so hergestellt, dass ein gasdichter Abschluss des Sensorgehäuses erreicht ist.

Für eine Messung mit möglichst hohem Signal-zu-Rausch-Abstand (SNR) muss ein möglichst großer Anteil der zur Verfügung stehenden Strahlungsleistung auf das Detektorelement auftreffen, d.h. der optische Durchsatz der Anordnung muss maximiert werden. Daher ist es vorteilhaft, die strahlungsempfindliche Fläche desselben möglichst groß zu gestalten und die auftreffende Strahlung aus einem möglichst großen Raumwinkel (field of view, FOV) erfassen zu können. Zu diesem Zweck sind die Fensteröffnung im Gehäuse sowie das Filter möglichst groß zu gestalten. Der Abstand zwischen Detektorelement und Fensteröffnung sollte möglichst gering sein.

Thermische Infrarotsensoren haben die nachteilige Eigenschaft, dass Änderungen der Umgebungs- bzw. Gehäusetemperatur ebenfalls vom Detektorelement erfasst werden und infolgedessen ein Störsignal generiert wird. Dem kann durch ein zusätzliches identisches Detektorelement (Kompensationselement), das von der elektromagnetischen Strahlung abgeschirmt ist oder keine absorbierende Beschichtung besitzt, entgegengewirkt werden. Es wird mit dem empfindlichen Detektorelement entweder antiparallel oder in Reihe jedoch mit entgegengesetzter Polarisationsrichtung des Materials elektrisch so verbunden, dass die Störsignale genau gleich groß aber von entgegengesetzter Polarität sind, so dass sie sich gegenseitig kompensieren. Das Kompensationselement sollte zu diesem Zweck möglichst in identischer Weise thermisch mit dem Gehäuse verbunden und in unmittelbarer Nähe zum empfindlichen Element angeordnet sein.

Zusätzlich zu den eigentlichen Messkanälen mit auf die jeweiligen Komponenten zugeschnittenen Filtern wird oft ein zusätzlicher Referenzkanal eingesetzt, wobei die Filterwellenlänge dieses Kanals einen absorptionsfreien Wellenlängenbereich erfasst. Das Signal des Referenzkanals kann dem Ausgleich von Intensitätsschwankungen der elektromagnetischen Strahlung aufgrund externer Störeinflüsse oder Alterung dienen.

Für die gleichzeitige Messung mehrerer Komponenten eines Stoffgemisches (Mehrkomponentenanalyse) wird eine der zu messenden Komponenten entsprechende Anzahl von Detektoren und Filtern benötigt. Die Kombination aus einem Detektor und dem zugehörigem Filter soll als Kanal bezeichnet werden.

Ein solches Messsystem kann mit mehreren Einzelsensoren mit jeweils einem Detektorkanal ausgebildet sein. Dieser Aufbau hat aber verschiedene Nachteile: Eine Vielzahl von Einzeldetektoren limitiert die Miniaturisierung aufgrund der üblicherweise verwendeten Gehäusegrößen und bewirkt einen sehr geringen optischen Füllgrad bzw. Durchsatz. Zudem verursacht der Aufbau deutlich erhöhte Kosten.

Mit dem oben beschriebenen Grundaufbau mit an der Fensteröffnung montierten Filtern ist es prinzipiell möglich, preisgünstige und miniaturisierte Sensoren mit einer Vielzahl von Detektorkanälen in einem Gehäuse zu realisieren. Bei gleicher Baugröße für Einkanalsensoren reduzieren sich jedoch die Empfängerfläche der einzelnen Kanäle und auch das FOV. Beides wirkt sich negativ auf den optischen Durchsatz aus. Die Integration zusätzlicher Komponenten, z.B. für die Vorverstärker, resultiert in zusätzlichen Restriktionen und einem komplexeren Aufbau.

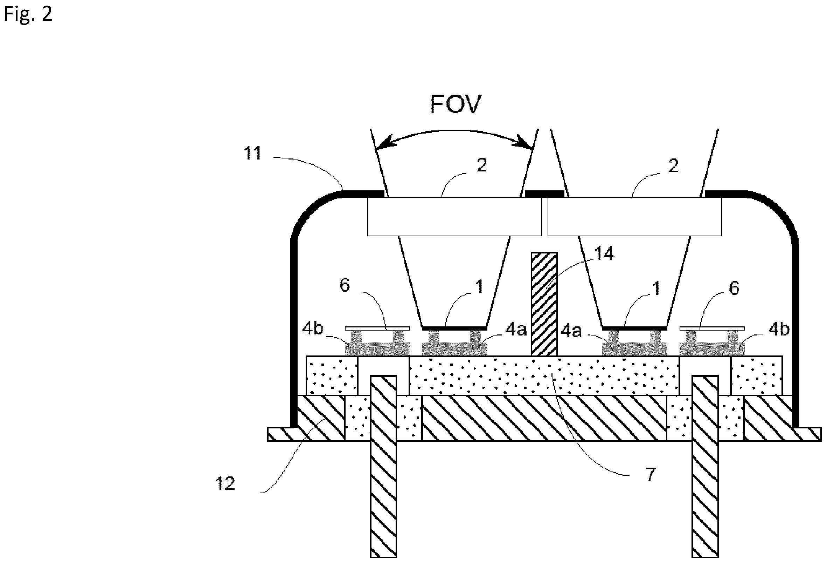

Eine weitere Schwierigkeit bei dem beschriebenen Aufbau ist es, dass ein optisches Übersprechen zwischen den Kanälen im Gehäuse unterdrückt werden muss. Zu diesem Zweck kann eine Blende als zusätzliches Bauteil eingesetzt werden, die die Strahlung zwischen den verschiedenen Kanälen blockt (Figur 2). Alternativ werden die Detektorelemente in einem ausreichend großen Abstand zueinander angeordnet. Beide Ansätze machen den Aufbau komplexer oder benötigen zusätzlichen Bauraum. Der Einsatz von zusätzlichen Kompensationselementen erschwert die Miniaturisierung zusätzlich, da sie den Platzbedarf weiter erhöhen.

In einem weiteren alternativen Aufbau für die Integration mehrerer Kanäle in ein gemeinsames Gehäuse werden die jeweiligen Filter jedes Kanals innerhalb des Gehäuses dicht über dem jeweiligen Detektorelement angeordnet und in oder auf einem zusätzlichen Filterhalter montiert (US 5,497,003 A). Das Gehäuse besitzt eine einzige große Fensteröffnung für alle Kanäle, die wiederum durch ein breitbandig transmittierendes Filter oder Fenster abgeschlossen ist. Die Anordnung des Filters dicht über den Detektorelementen ermöglicht ein höheres FOV der einzelnen Kanäle und damit einen verbesserten optischen Durchsatz als in der oben beschriebenen Lösung. Um ein Übersprechen zuverlässig zu verhindern, muss jedoch ein Mindestabstand zwischen den Elementen benachbarter Kanäle eingehalten werden. Die Kanäle werden hier bevorzugt in einem Kreis angeordnet, wobei die Zwischenräume ungenutzt bleiben. Gegenüber Einzelsensoren lässt sich so zwar eine Steigerung des optischen Durchsatzes erreichen, sie schöpft das Potenzial jedoch nicht aus.

Das Dokument US 5,041,723 zeigt eine Sensorvorrichtung mit mehreren optischen Detektoren und Filterelementen. In der Druckschrift EP 0 913 675 A1 ist eine Vorrichtung mit zwei Detektoren beschrieben. Das Dokument US 4,722,612 zeigt eine Vorrichtung mit mehreren Thermoelementen.

Es ist daher Aufgabe der Erfindung, eine Vorrichtung bereitzustellen, die mehrere pyroelektrische Sensoren zur gleichzeitigen Bestimmung mehrerer unterschiedlicher fluidaler Stoffe und/oder Stoffkonzentrationen in einem Gehäuse integriert und dabei eine möglichst große strahlungsempfindliche Fläche, einen hohen optischen Füllgrad und ein großes FOV aufweist. Weiterhin sollen die Detektorelemente thermisch gut vom Gehäuse entkoppelt sein und das optische Übersprechen zwischen den Einzelsensoren minimiert werden können sein.

Erfindungsgemäß wird diese Aufgabe mit den Merkmalen des Anspruchs 1 gelöst. Vorteilhafte Ausgestaltungen und Weiterbildungen der Erfindung können mit in abhängigen Ansprüchen bezeichneten Merkmalen realisiert werden.

Die Aufgabe wird dadurch gelöst, dass n (mit n > 1) Detektorelemente und die jeweils zugehörigen optischen Filter in einer Halterung, die aus mehreren gleichartigen Halterungselementen besteht, angeordnet sind. Ein Detektorelement und ein zugehöriges optisches Filter bilden jeweils einen pyroelektrischen Infrarotsensor. Jeder dieser Infrarotsensoren wird einem Stoff, einem chemischen Element oder einer chemischen Verbindung im zu untersuchenden Stoff zugeordnet. Die n pyroelektrischen Infrarotsensoren sind auf einem Substrat mit darauf aufgebrachten elektrischen Kontaktierungen in einem Gehäuse angeordnet. Über den *n* pyroelektrischen Infrarotsensoren ist ein einziges gemeinsames Eintrittsfenster angeordnet, durch das die elektromagnetische Strahlung auf die *n* Filter und weiter auf die *n* Detektorelemente auftritt, nachdem sie einen Stoff durchstrahlt hat.

Mehrere Halterungselemente sind als zur Strahlungsquelle hin offener Rahmen ausgebildet. Die Seitenwände dieser Rahmen sollten möglichst schmal ausgebildet sein, so dass nur eine geringe Grundfläche der Gesamtanordnung dadurch genutzt wird und der optische Füllgrad der Anordnung vergrößert, bevorzugt maximiert wird. Die Halterungselemente können bevorzugt eine rechteckige Grundfläche aufweisen. Die darin angeordneten n Detektorelemente können bevorzugt eine rechteckige, besonders bevorzugt eine quadratische Grundfläche aufweisen. Die Halterungselement(e) kann/können in einer weiteren bevorzugten Form auch als Kreissegmente und/oder Kreissektoren ausgebildet sein.

Die Grundfläche von Halterungselementen können auch als Öffnung ausgebildet sein.

Die Seitenwände von Halterungselementen können zumindest teilweise schräg geneigt ausgebildet und/oder reflektierend beschichtet sein. Die auf die Seitenwände auftreffende Strahlung kann so zumindest teilweise auf das/die n Detektorelement(e) reflektiert und von diesem/diesen absorbiert werden, wodurch die strahlungsempfindliche Fläche vergrößert und der optische Durchsatz erhöht wird.

Halterungselemente können aus einem elektrisch leitfähigen Material oder mit einer elektrisch leitfähigen Beschichtung ausgebildet sein. Dann können Halterungselemente den elektrischen Anschluss der zur Grundfläche orientierten Elektrode des Detektorelementes bilden. Dafür kann eine leitfähige Verbindung zwischen einer Elektrode und den Auflagepunkten des/der Halterungselemente(s), beispielsweise durch silberhaltigen Leitklebstoff, hergestellt werden.

Um das optische Übersprechen zwischen benachbarten Einzelsensoren zu minimieren, sollten Halterungselemente mit einem für die jeweilige elektromagnetische Strahlung nicht transparenten Material gebildet und/oder intransparent beschichtet sein. Dabei kann es genügen, dass lediglich ein Teil aus einem nichttransparenten Material gebildet ist, mit dem verhindert werden kann, dass elektromagnetische Strahlung eines benachbarten Halteelementes auf einen daneben in einem weiteren Halteelement angeordneten Detektor auftrifft.

Halterungselemente können mittels mikromechanischer Strukturierungsverfahren aus Siliziumwafern und ihre Geometrie mit einer Kombination aus Nass- und Trockenätzen von der Vorder- und Rückseite des Wafers hergestellt werden. Alternativ können Halterungselemente mittels Mikrospritzgießen, Mikrofräsen oder Mikroprägen hergestellt werden.

In zumindest einem Halterungselement sind Auflagepunkte für die n Detektorelemente und die n Filter ausgebildet, so dass die strahlungsempfindlichen Oberflächen der *n* Detektorelemente und der *n* Filter parallel zur Grundfläche der Halterungselemente angeordnet sind. Zumindest die n Detektoren sind in einem Abstand zur Grundfläche der Halterungselemente und einem weiteren Abstand zu der der Grundfläche gegenüberliegenden Öffnung der Halterungselemente mit kleiner Kontaktfläche angeordnet. Der Abstand zur Grundfläche kann vorzugsweise mindestens 100 µm und/oder zu der der Grundfläche gegenüberliegenden Öffnung des Halterungselements mindestens 100 µm betragen.

Die Größe der Auflagepunkte ist möglichst gering zu wählen, so dass Wärmeableitung aus dem/den *n* Detektorelement(en) in das/die Halterungselement(e) so gering wie möglich und damit die thermische Zeitkonstante ausreichend hoch ist.

Die Größe von Halterungselementen sollte so an die Größe des/der *n* Detektorelemente(s) angepasst sein, dass um das/die *n* Detektorelement(e) umlaufend jeweils ein freier Spalt von < 100 µm verläuft.

Eine erfindungsgemäße Vorrichtung ist so aufgebaut, dass zwei gleichartige Halterungselemente übereinander angeordnet sind, wobei in dem dem Fenster des Gehäuses abgewandten Halterungselement *n* Kompensationselemente und in dem dem Fenster zugewandten Halterungselement *n* Detektorelemente und *n* Filter angeordnet sind. Die Filter sind dabei direkt auf dem jeweiligen Halterungselement des zugehörigen Detektorelementes befestigt. Diese Anordnung ist besonders vorteilhaft, da die *n* Kompensationselemente dadurch von der einfallenden elektromagnetischen Strahlung abgeschirmt sind und keinen zusätzlichen Bauraum auf der Grundfläche benötigen.

In einer weiteren Ausführungsform können drei gleichartige Halterungselemente übereinander angeordnet sein, wobei in dem dem Fenster des Gehäuses abgewandten Halterungselement *n* Kompensationselemente, in dem dem Fenster zugewandten Halterungselement *n* Filter und in dem dazwischen angeordneten Halterungselement *n* Detektorelemente angeordnet sind.

In einer nächsten Ausführungsvariante können in einem einzigen Halterungselement alle Detektorelemente und die zugehörigen Filter angeordnet sein.

An jedem Halterungselement sollte mindestens eine Seitenfläche des Rahmens durchbrochen sein, um elektrische Anschlüsse des/der Detektorelemente(s) mit einem Vorverstärker und/oder den äußeren Anschlüssen des Gehäuses elektrisch leitend zu verbinden. Um ein optisches Übersprechen zwischen pyroelektrischen Infrarotsensoren zu unterdrücken, sollten die durchbrochenen Flächen unmittelbar benachbarter Halterungselemente nicht zueinander zeigen, da so keine oder nur sehr wenig elektromagnetische Strahlung von einem Halterungselement in das benachbarte Halterungselement gelangen kann.

Das/die Detektorelement(e) kann/können durch Drahtbondverbindungen elektrisch leitend mit einem Vorverstärker und/oder äußeren Anschlüssen des Gehäuses verbunden sein.

Durch die erfindungsgemäße Vorrichtung können möglichst viele pyroelektrische Infrarotsensoren in einem kleinen Bauraum angeordnet und so der optische Füllgrad der Detektoranordnung erhöht werden. Durch die Anordnung der Einzelsensoren dicht nebeneinander können die Einzelsensoren durch die gemeinsame Strahlungsquelle gleichmäßig und mit hoher Intensität beleuchtet werden. Auf diese Weise wird ein leistungsfähiger, kompakter und preiswerter Mehrkanalsensor gebildet.

Auch für eine Ausführung mit nur einem Einzelsensor mit einem Detektorelement und einem zugehörigen Filter ergeben sich Vorteile. So ist beispielsweise die Fläche eines Filters, das in oder auf einem Halterungselement angeordnet ist, deutlich kleiner als ein in der Fensteröffnung der Gehäusekappe angeordnetes Filter. Dies kann bei teuren Filtern Kostenvorteile bewirken.

Durch die Anordnung der n Filter auf/in dem/den Halterungselement(en) anstatt in der Fensteröffnung der Gehäusekappe ergibt sich ein weiter Vorteil. Um das Gehäuse hermetisch gegenüber seiner Umgebung abzuschließen, müsste das Filter in die Gehäusekappe gelötet werden. Nicht mit allen Filtern lässt sich dies aber realisieren. Wird/erden das/die n Filter in oder auf dem/den Halterungselement(en) im Gehäuse angeordnet, kann die Fensteröffnung der Gehäusekappe durch ein zum Löten geeignetes Zentralfenster mittels Löten verschlossen werden.

Nachfolgend soll die Erfindung anhand von Beispielen und Abbildungen näher erläutert werden. Wiederkehrende Merkmale sind mit identischen Bezugszeichen versehen.

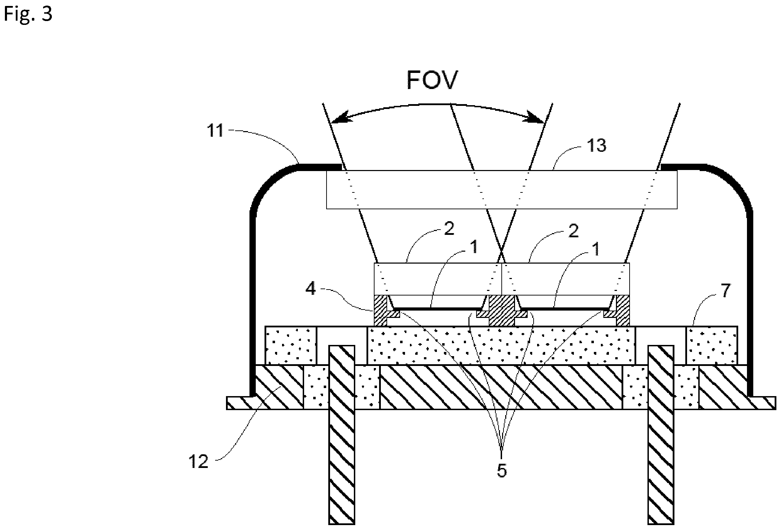

Figur 1 und 2 zeigen den Stand der Technik. Figuren 3 bis 11 zeigen Ausführungsvarianten einer Vorrichtung.
In Figur 1 ist ein schematischer Querschnitt eines einkanaligen Detektors in einem Transistorrundgehäuse dargestellt. Dabei sind ein Detektorelement 1 und ein Kompensationselement 6 auf jeweils einer eigenen Halterung 4.a und 4.b auf einem Substrat 7 angeordnet. Das Filter 2 ist in die Fensteröffnung der Gehäusekappe 11 integriert.

Figur 2 zeigt den schematischen Aufbau eines zweikanaligen Detektors in einem Transistorrundgehäuse analog zum Aufbau aus Figur 1. Zwischen den zwei Kanälen ist eine Blende 14 angeordnet, um das Übersprechen zwischen den beiden Kanälen zu verhindern.

Figur 3 zeigt eine erste Ausführungsvariante für eine Vorrichtung. In einem Transistorrundgehäuse ist ein monolithisch ausgeführtes Halterungselement 4 mit ebener Grundfläche und senkrechten Seitenwänden für zwei Detektorelemente 1 auf einem Substrat 7 angeordnet. In dem Halterungselement 4 sind sechs Auflagepunkte 5 ausgebildet, auf denen die Detektorelemente 1 angeordnet sind. Die zu den Detektorelementen 1 zugehörigen Filter 2 sind direkt auf dem Halterungselement 4 befestigt. Über den Detektorelementen 1 und Filtern 2 ist ein gemeinsames Eintrittsfenster 13 angeordnet, durch das die elektromagnetische Strahlung auf die Filter 2 und weiter auf die Detektorelemente 1 auftrifft, nachdem sie ein Fluid durchstrahlt hat.

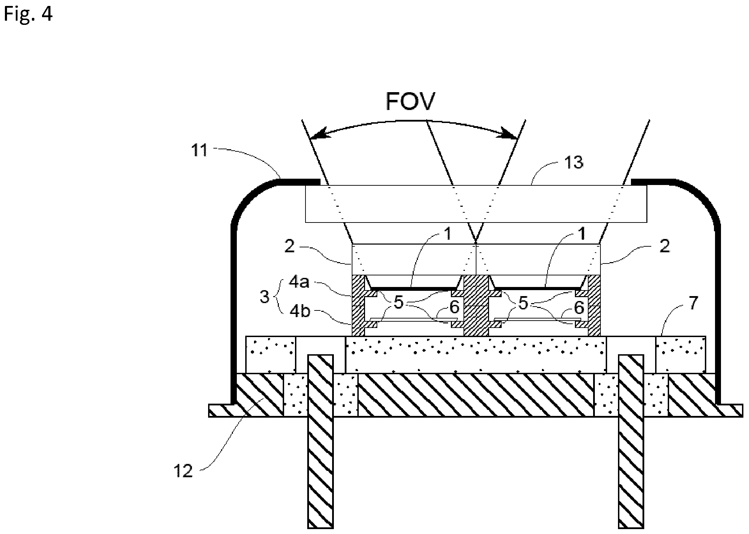

Figur 4 zeigt einen analogen Aufbau, der, gemäß der Erfindung, um jeweils ein Kompensationselement 6, das einem Detektorelement 1 zugeordnet ist, erweitert ist. Dabei wird auf dem Substrat 7 ein Halterungselement 4b und darin auf den Auflagepunkten 5 ein Kompensationselement 6 angeordnet. Auf das Halterungselement 4b mit dem Kompensationselement 6 wird dann das Halterungselement 4a mit dem Detektorelement 1 und dem Filter 2 angeordnet. Die Halterungselemente 4a und 4b bilden die Halterung 3. Die zusätzliche Bauhöhe durch das zweite Halterungselement 4b ist dabei minimal. Es ergeben sich bei diesem Aufbau keine Einschränkungen hinsichtlich der Anzahl der Kanäle oder des optischen Füllgrades.

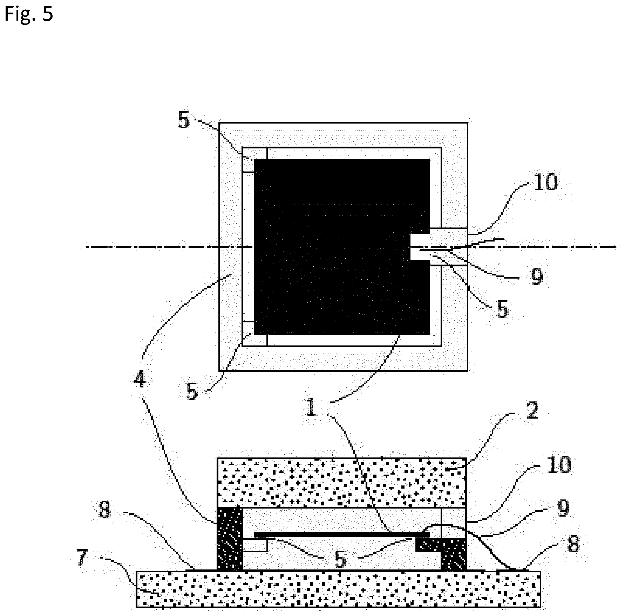

In Figur 5 ist als dritte Ausführungsvariante einer Vorrichtung eine Draufsicht und eine Schnittdarstellung für einen Einzelkanal, also einen einzelnen pyroelektrischen Infrarotsensor, jedoch ohne Gehäuse, dargestellt. Filter und Substrat sind in der Draufsicht nicht dargestellt. Auf einem Substrat 7 mit darauf aufgebrachten elektrischen Kontaktierungen/Leitbahnen 8 ist ein Halterungselement 4 angeordnet. Auf den daran ausgebildeten Auflagepunkten 5 ist das Detektorelement 1 angeordnet. Das Filter 2 ist direkt auf dem Halterungselement 4 befestigt. Durch eine seitliche Öffnung 10 im Halterungselement 4 ist das Detektorelement 1 mittels einer Drahtbondverbindung 9 elektrisch leitend mit dem Substrat 7 bzw. den darauf befindlichen elektrischen Leitbahnen 8 verbunden.

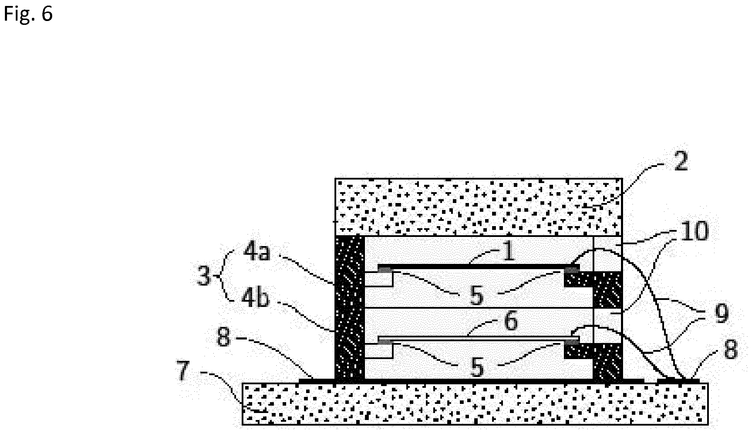

Figur 6 zeigt als vierte Ausführungsvariante einen analogen Aufbau im Querschnitt, der um ein Kompensationselement 6 erweitert ist. Dabei ist auf dem Substrat 7 mit darauf aufgebrachten elektrischen Kontaktierungen/Leitbahnen 8 ein Halterungselement 4b und darin auf den Auflagepunkten 5 ein Kompensationselement 6 angeordnet. Dieses ist durch eine seitliche Öffnung 10 im Halterungselement 4b mittels einer Drahtbondverbindung 9 elektrisch leitend mit dem Substrat 7 bzw. den darauf befindlichen elektrischen Leitbahnen 8 verbunden. Auf das Halterungselement 4b mit dem Kompensationselement 6 wird dann das Halterungselement 4a mit dem Detektorelement 1 und dem Filter 2 angeordnet. Die Halterungselemente 4a und 4b bilden die Halterung 3.

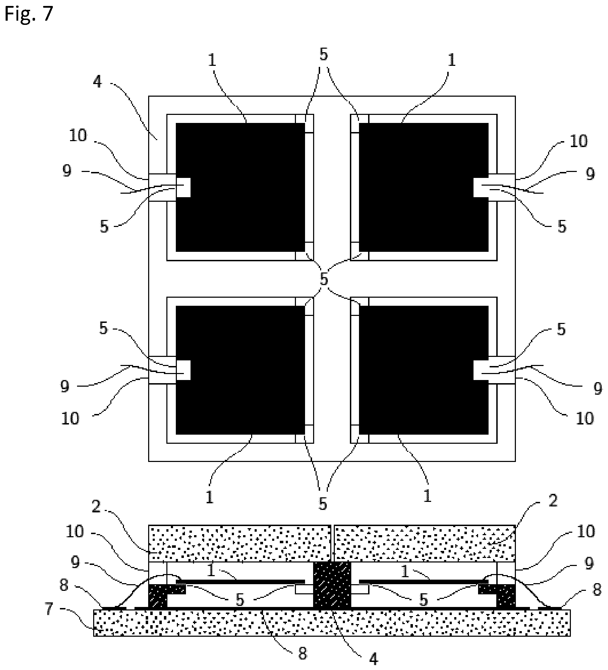

Figur 7 zeigt eine fünfte Ausführungsvariante im Querschnitt und einer Draufsicht. Filter und Substrat sind in der Draufsicht nicht dargestellt. Dabei wird das Halterungselement 4 für vier pyroelektrische Einzelsensoren monolithisch ausgebildet. Das monolithische Halterungselement 4 ist auf einem Substrat 7 mit darauf aufgebrachten elektrischen Kontaktierungen/Leitbahnen 8 angeordnet. In dem Halterungselement 4 sind auf den jeweils drei Auflagepunkten 5 die Detektorelemente 1 angeordnet. Die Filter 2 sind direkt auf dem gleichen Halterungselement 4 angeordnet. An den nach außen zeigenden Seiten des Halterungselementes 4 sind durch Öffnungen 10 die Detektorelemente 1 mittels Drahtbondverbindungen 9 elektrisch leitend mit dem Substrat 7 bzw. den darauf befindlichen Leitbahnen 8 verbunden.

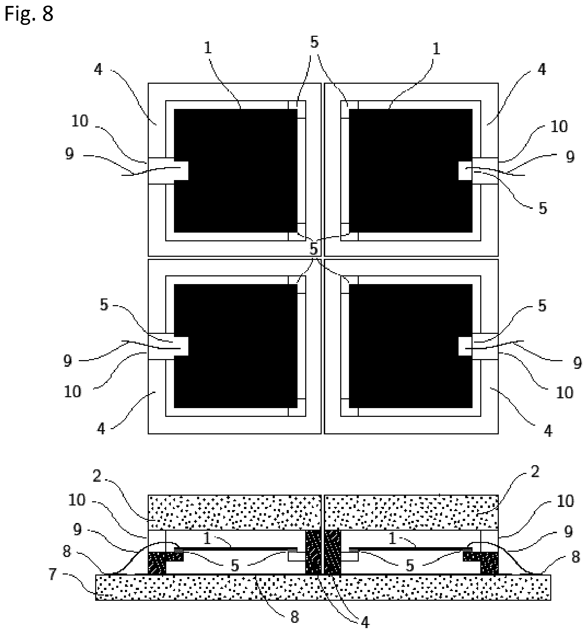

Eine sechste Ausführungsvariante zeigt Figur 8 in Draufsicht und Querschnitt. Filter und Substrat sind in der Draufsicht nicht dargestellt. Hier sind vier pyroelektrische Infrarotsensoren als Einzelsensoren ausgebildet und dicht nebeneinander auf einem Substrat 7 mit darauf aufgebrachten elektrischen Kontaktierungen/Leitbahnen 8 angeordnet. Dazu sind vier Halterungselemente 4 auf dem Substrat 7 und auf den in den Halterungselementen 4 ausgebildeten Auflagepunkten 5 die Detektorelemente 1 angeordnet. Direkt auf jedem Halterungselement 4 ist jeweils ein Filter 2 angeordnet. An den nach außen zeigenden Seiten der Halterungselemente 4 sind durch Öffnungen 10 die Detektorelemente 1 mittels Drahtbondverbindungen 9 elektrisch leitend mit dem Substrat 7 bzw. den darauf befindlichen elektrischen Leitbahnen 8 verbunden.

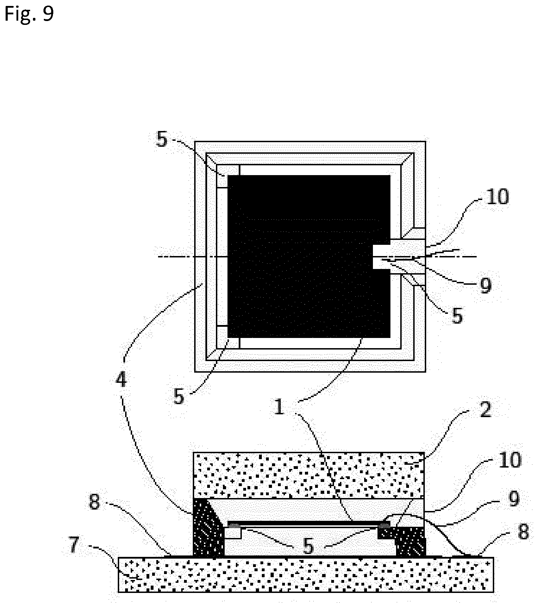

Figur 9 zeigt eine siebte Ausführungsvariante für eine Vorrichtung, bei der das Halterungselement 4 mit schräg geneigten Innenseiten durch ein kombiniertes Nass- und Trockenätzverfahren aus Silizium hergestellt wurde, so dass die schräg geneigten Innenseiten als Reflektor wirken.

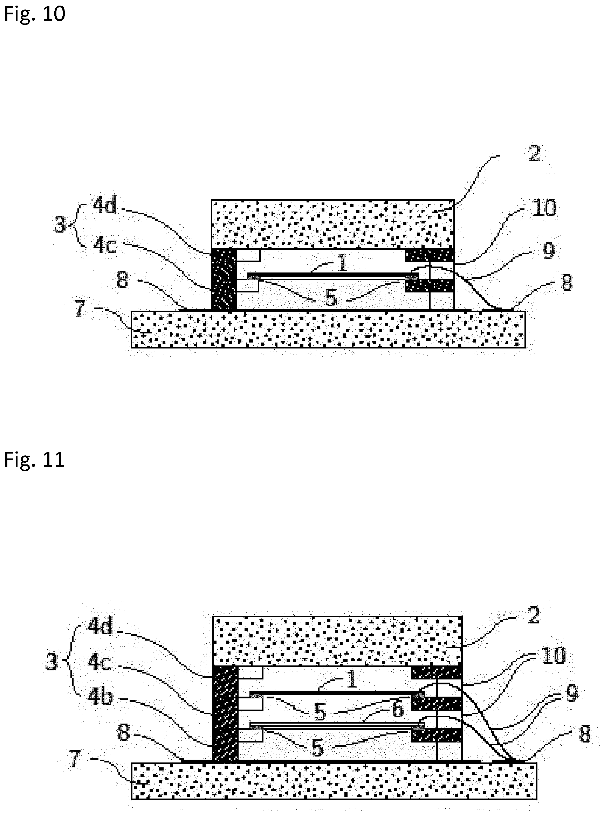

Die achte Ausführungsvariante einer Vorrichtung ist in Figur 10 dargestellt. Dabei bilden zwei Halterungselemente 4c und 4d eine Halterung 3. Auf einem Substrat 7 mit darauf aufgebrachten elektrischen Kontaktierungen/Leitbahnen 8 ist ein erstes Halterungselement 4c und auf dessen Auflagepunkten 5 das Detektorelement 1 angeordnet. Auf das erste Halterungselement 4c ist ein zweites Halterungselement 4d angeordnet, auf dem ein optisches Filter 2 befestigt ist. Durch eine seitliche Öffnung 10 im Halterungselement 4d ist das Detektorelement 1 mittels Drahtbondverbindungen 9 elektrisch leitend mit dem Substrat 7 bzw. den darauf befindlichen elektrischen Leitbahnen 8 verbunden.

Figur 11 zeigt einen analogen Aufbau als neunte Ausführungsvariante, bei der zwischen dem Halterungselement 4c und dem Substrat 7 ein weiteres Halterungselement 4b eingefügt ist, auf dessen Auflagepunkten 5 ein Kompensationselement 6 angeordnet ist.

Die Darstellungen in den Figuren sind auf die Darstellung der Anordnung der für die optischen und thermischen Eigenschaften relevanten Bauteile reduziert. Komponenten des Vorverstärkers und elektrische Kontaktierungen sind nicht dargestellt. Die in den Beispielen beschriebenen und gezeigten Merkmale können unabhängig vom jeweiligen einzelnen Beispiel miteinander kombiniert eingesetzt werden.

### Bezugszeichen:

- 1: Detektorelement
- 2: Filter
- 3: Halterung
- 4: Halterungselement
- 4a: Halterungselement für Detektorelement 1 und ggf. Filter 2
- 4b: Halterungselement für Kompensationselement 6
- 4c: Halterungselement für Detektorelement 1
- 4d: Halterungselement für Filter 2
- 5: Auflagepunkte
- 6: Kompensationselement
- 7: Substrat
- 8: elektrische Kontaktierungen/Leitbahnen
- 9: Drahtbondverbindungen
- 10: Öffnung im Halterungselement 4
- 11: Gehäusekappe mit Fensteröffnung
- 12: Gehäusesockel
- 13: Zentralfenster bzw. -filter in der Gehäusekappe 11
- 14: Blende

## Patentansprüche

1. Vorrichtung zur gleichzeitigen Bestimmung mehrerer unterschiedlicher Stoffe und/oder Stoffkonzentrationen und/oder der Beschaffenheit von Feststoffen und/oder deren Oberflächen mit *n*, mit n>1, Infrarotsensoren, wobei jeweils ein pyroelektrischer Infrarotsensor, der mit einem pyroelektrischen Detektorelement (1) und einem zugehörigen optischen Filter (2) gebildet ist, einem Stoff zugeordnet ist, und die *n*, mit n>1, pyroelektrischen Detektorelemente (1) und die zugehörigen optischen Filter (2) in einer Halterung (3) aus mehreren gleichartigen Halterungselement(en) (4) in einem Gehäuse (11) auf einem Substrat (7) mit darauf aufgebrachten elektrischen Kontaktierungen (8) angeordnet sind, und
über den *n* pyroelektrischen Detektorelementen (1) und den zugehörigen Filtern (2) ein gemeinsames Eintrittsfenster (13) im Gehäuse (11) angeordnet ist, so dass elektromagnetische Strahlung auf die *n* Filter (2) und anschließend auf die *n* Detektorelemente (1) auftrifft, nachdem die elektromagnetische Strahlung einen Stoff durchstrahlt hat, und
die Halterungselemente (4) als ein zur Strahlungsquelle hin offener Rahmen ausgebildet sind, und darin die strahlungsempfindlichen Oberflächen der *n* Detektorelemente (1) und der *n* Filter (2) parallel zur Grundfläche der Halterungselemente (4) angeordnet sind, **dadurch gekennzeichnet, dass**
in zumindest einem Halterungselement (4a) Auflagepunkte (5) für die n Detektorelemente (1) und die *n* Filter (2) ausgebildet sind, wobei zumindest die n Detektorelemente (1) in einem Abstand zur Grundfläche des zumindest einen Halterungselements (4a) und einem weiteren Abstand zu der der Grundfläche gegenüberliegenden Öffnung des zumindest einen Halterungselements (4a) angeordnet sind; und
zwei gleichartige Halterungselemente (4) übereinander angeordnet sind, wobei in dem dem Eintrittsfenster (13) abgewandten Halterungselement (4b) *n* Kompensationselemente (6) und in dem dem Fenster zugewandten Halterungselement (4a) *n* Detektorelemente (1) und *n* Filter (2) angeordnet sind.

2. Vorrichtung nach Anspruch 1, **dadurch gekennzeichnet, dass** mindestens eine Seitenfläche des Halterungselementes (4a) für die elektrischen Anschlüsse der *n* Detektorelemente (1) an einen Vorverstärker und/oder äußere Anschlüsse des Gehäuses durchbrochen ist.

3. Vorrichtung nach Anspruch 2 **dadurch gekennzeichnet, dass** die durchbrochenen Seitenflächen zweier unmittelbar nebeneinander angeordneten Halterungselemente (4) nicht zueinander zeigen.

4. Vorrichtung nach einem der vorangehenden Ansprüche, **dadurch gekennzeichnet, dass** die Grundfläche der Halterungselemente (4) rechteckig ist.

5. Vorrichtung nach einem der vorangehenden Ansprüche 1 bis 3, **dadurch gekennzeichnet, dass** die Grundfläche der Halterungselemente (4) ein Kreissegment oder ein Kreissektor ist.

6. Vorrichtung nach einem der vorangehenden Ansprüche, **dadurch gekennzeichnet, dass** der Abstand der *n* Detektorelemente (1) zur Grundfläche des Halterungselementes (4a) mindestens 100 µm und/oder zu der der Grundfläche gegenüberliegenden Öffnung des jeweiligen Halterungselementes (4a) mindestens 100 µm beträgt.

7. Vorrichtung nach einem der vorangehenden Ansprüche 1 bis 5, **dadurch gekennzeichnet, dass** drei gleichartige Halterungselemente (4) übereinander angeordnet sind, wobei direkt auf dem Substrat (7) ein erstes Halterungselement (4b) mit *n* Kompensationselementen (6), darauf ein zweites Halterungselement (4c) mit *n* Detektorelementen (1) und auf dem zweiten ein drittes Halterungselement (4d) mit *n* Filtern (2) angeordnet sind.

8. Vorrichtung nach einem der vorangehenden Ansprüche, **dadurch gekennzeichnet, dass** die *n* Detektorelemente (1) durch Drahtbondverbindungen (9) elektrisch leitend mit einem Vorverstärker und/oder äußeren Anschlüssen des Gehäuses (11) verbunden sind.

9. Vorrichtung nach einem der vorangehenden Ansprüche, **dadurch gekennzeichnet, dass** die Seitenwände der Halterungselementes (4) zumindest teilweise schräg geneigt ausgebildet und/oder reflektierend beschichtet ist/sind.

10. Vorrichtung nach einem der vorangehenden Ansprüche, **dadurch gekennzeichnet, dass** die Halterungselemente (4) aus elektrisch leitfähigem Material oder mit einer elektrisch leitfähigen Beschichtung ausgebildet sind.

11. Vorrichtung nach einem der vorangehenden Ansprüche, **dadurch gekennzeichnet, dass** die Halterungselemente (4) mittels mikromechanischer Strukturierungsverfahren aus Siliziumwafern herstellbar sind.

12. Vorrichtung nach einem der vorangehenden Ansprüche, **dadurch gekennzeichnet, dass** die Geometrie der Halterungselemente (4) mittels einer Kombination aus Nass- und Trockenätzen herstellbar ist.

13. Vorrichtung nach einem der vorangehenden Ansprüche 1 bis 10, **dadurch gekennzeichnet, dass** die Halterungselemente (4) mittels Mikrospritzgießen, Mikroprägen oder Mikrofräsen herstellbar sind.

14. Vorrichtung nach einem der vorangehenden Ansprüche, **dadurch gekennzeichnet, dass** die Halterungselemente (4, 4a, 4b, 4c, 4d) mit einem für die jeweilige elektromagnetische Strahlung nicht transparentem Material gebildet und/oder intransparent beschichtet sind.

## Claims

1. Device for simultaneously determining a plurality of different substances and/or substance concentrations and/or the constitution of solids and/or the surfaces thereof with *n,* where n > 1, infrared sensors, wherein a respective pyroelectric infrared sensor formed with a pyroelectric detector element (1) and an associated optical filter (2) is assigned to a substance, and
the *n,* where n > 1, pyroelectric detector elements (1) and the associated optical filters (2) are arranged in a mount (3) composed of a plurality of mount element(s) (4) of identical type in a housing (11) on a substrate (7) with electrical contacts (8) applied thereon, and
a common entrance window (13) in the housing (11) is arranged above the *n* pyroelectric detector elements (1) and the associated filters (2), such that electromagnetic radiation impinges on the *n* filters (2) and subsequently on the *n* detector elements (1) after the electromagnetic radiation has radiated through a substance, and
the mount elements (4) are embodied as a frame that is open towards the radiation source, and therein the radiation-sensitive surfaces of the *n* detector elements (1) and of the *n* filters (2) are arranged parallel to the base area of the mount elements (4), **characterized in that**
bearing points (5) for the n detector elements (1) and the n filters (2) are embodied in at least one mount element (4a), wherein at least the n detector elements (1) are arranged at a distance from the base area of the at least one mount element (4a) and at a further distance from the opening of the at least one mount element (4a), said opening being situated opposite the base area; and
two mount elements (4) of identical type are arranged one above the other, wherein *n* compensation elements (6) are arranged in the mount element (4b) facing away from the entrance window (13) and *n* detector elements and *n* filters (2) are arranged in the mount element (4a) facing the window.

2. Device according to Claim 1, **characterized in that** at least one side area of the mount element (4a) is perforated for the electrical connections of the *n* detector elements (1) to a preamplifier and/or external connections of the housing.

3. Device according to Claim 2, **characterized in that** the perforated side areas of two mount elements (4) arranged directly next to one another do not face one another.

4. Device according to any of the preceding claims, **characterized in that** the base area of the mount elements (4) is rectangular.

5. Device according to any of the preceding Claims 1 to 3, **characterized in that** the base area of the mount elements (4) is a circle segment or a circle sector.

6. Device according to any of the preceding claims, **characterized in that** the distance from the *n* detector elements (1) to the base area of the mount element (4a) is at least 100 µm and/or to the opening of the respective mount element (4a), said opening being situated opposite the base area, is at least 100 µm.

7. Device according to any of the preceding Claims 1 to 5, **characterized in that** three mount elements (4) of identical type are arranged one above another, wherein there are arranged directly on the substrate (7) a first mount element (4b) with *n* compensation elements (6), thereon a second mount element (4c) with *n* detector elements (1) and on the second mount element a third mount element (4d) with *n* filters (2) .

8. Device according to any of the preceding claims, **characterized in that** the *n* detector elements (1) are electrically conductively connected to a preamplifier and/or external connections of the housing (11) by wire bond connections (9).

9. Device according to any of the preceding claims, **characterized in that** the side wall/s of the mount element (4) is/are embodied in an at least partly obliquely inclined fashion and/or coated in a reflective fashion.

10. Device according to any of the preceding claims, **characterized in that** the mount elements (4) are embodied from electrically conductive material or with an electrically conductive coating.

11. Device according to any of the preceding claims, **characterized in that** the mount elements (4) are producible from silicon wafers by means of micromechanical structuring methods.

12. Device according to any of the preceding claims, **characterized in that** the geometry of the mount elements (4) is producible by means of a combination of wet and dry etching.

13. Device according to any of the preceding Claims 1 to 10, **characterized in that** the mount elements (4) are producible by means of microinjection moulding, micro-embossing or micromilling.

14. Device according to any of the preceding claims, **characterized in that** the mount elements (4, 4a, 4b, 4c, 4d) are formed with a material that is non-transparent to the respective electromagnetic radiation, and/or are coated in a non-transparent fashion.

## Revendications

1. Dispositif destiné à la détermination simultanée de plusieurs matières et/ou concentrations de matières différentes et/ou de la nature de matières solides et/ou de leurs surfaces avec *n* capteurs infrarouges, où *n* >1, un capteur infrarouge pyroélectrique qui est formé avec un élément détecteur (1) pyroélectrique et un filtre (2) optique correspondant étant respectivement affecté à une matière, et
les *n* éléments détecteurs (1) pyroélectriques, où *n* >1, et les filtres (2) optiques correspondants étant disposés dans un support (3) composé de plusieurs éléments de support (4) similaires dans un boîtier (11) sur un substrat (7) sur lequel des éléments de mise en contact (8) électriques sont mis en place, et
une fenêtre d'entrée (13) commune étant disposée dans le boîtier (11) sur les *n* éléments détecteurs (1) pyroélectriques et les filtres (2) correspondants de telle sorte que le rayonnement électromagnétique heurte les *n* filtres (2) et ensuite les *n* éléments détecteurs (1) après que le rayonnement électromagnétique a pénétré dans une matière, et
les éléments de support (4) étant constitués sous forme d'un cadre ouvert vers la source de rayonnement, et les surfaces, sensibles au rayonnement, des *n* éléments détecteurs (1) et des *n* filtres (2) étant disposées à l'intérieur parallèlement à la surface de base des éléments de support (4), **caractérisé en ce que**
des points d'appui (5) pour les *n* éléments détecteurs (1) et les n filtres (2) sont constitués dans au moins un élément de support (4a), au moins les *n* éléments détecteurs (1) étant disposés à une distance de la surface de base de l'au moins un élément de support (4a) et à une autre distance de l'ouverture de l'au moins un élément de support (4a) opposée à la surface de base ;
et
deux éléments de support (4) similaires sont disposés l'un sur l'autre, *n* éléments de compensation (6) étant disposés dans l'élément de support (4b) éloigné de la fenêtre d'entrée (13), et *n* éléments détecteurs (1) et *n* filtres (2) étant disposés dans l'élément de support (4a) tourné vers la fenêtre.

2. Dispositif selon la revendication 1, **caractérisé en ce qu'**au moins une surface latérale de l'élément de support (4a) est perforée pour les connexions électriques des *n* éléments détecteurs (1) à un préamplificateur et/ou à des connexions extérieures du boîtier.

3. Dispositif selon la revendication 2, **caractérisé en ce que** les surfaces latérales perforées de deux éléments de support (4) disposés an voisinage direct l'une de l'autre ne sont pas dirigées l'une vers l'autre.

4. Dispositif selon l'une des revendications précédentes, **caractérisé en ce que** la surface de base des éléments de support (4) est rectangulaire.

5. Dispositif selon l'une des revendications précédentes 1 à 3, **caractérisé en ce que** la surface de base des éléments de support (4) est un segment de cercle ou un secteur de cercle.

6. Dispositif selon l'une des revendications précédentes, **caractérisé en ce que** la distance des *n* éléments détecteurs (1) à la surface de base de l'élément de support (4a) est au moins de 100 µm et/ou la distance à l'ouverture, opposée à la surface de base, de l'élément de support (4a) respectif est au moins de 100 µm.

7. Dispositif selon l'une des revendications précédentes 1 à 5, **caractérisé en ce que** trois éléments de support (4) similaires sont disposés de façon superposée, un premier élément de support (4b) avec *n* éléments de compensation (6) étant disposé directement sur le substrat (7), un deuxième élément de support (4c) avec *n* éléments détecteurs (1) étant disposé dessus, et un troisième élément de support (4d) avec *n* filtres (2) étant disposé sur le deuxième élément de support.

8. Dispositif selon l'une des revendications précédentes, **caractérisé en ce que** les *n* éléments détecteurs (1) sont raccordés par microsoudures de fils (9) de façon électriquement conductrice à un préamplificateur et/ou à des connexions extérieures du boîtier (11).

9. Dispositif selon l'une des revendications précédentes, **caractérisé en ce que** les parois latérales des éléments de support (4) sont constituées au moins partiellement de façon inclinée obliquement et/ou sont revêtues de façon réfléchissante.

10. Dispositif selon l'une des revendications précédentes, **caractérisé en ce que** les éléments de support (4) sont constitués de matériau électriquement conducteur ou comportent un revêtement électriquement conducteur.

11. Dispositif selon l'une des revendications précédentes, **caractérisé en ce que** les éléments de support (4) peuvent être réalisés au moyen de procédés de structuration micromécaniques à partir de plaquettes de silicium.

12. Dispositif selon l'une des revendications précédentes, **caractérisé en ce que** la géométrie des éléments de support (4) peut être réalisée au moyen d'une combinaison de gravures par voie humide et par voie sèche.

13. Dispositif selon l'une des revendications précédentes 1 à 10, **caractérisé en ce que** les éléments de support (4) peuvent être réalisés au moyen de micro-moulages par injection, micro-gaufrages ou micro-fraisages.

14. Dispositif selon l'une des revendications précédentes, **caractérisé en ce que** les éléments de support (4, 4a, 4b, 4c, 4d) sont formés avec un matériau non transparent au rayonnement électromagnétique respectif et/ou sont revêtus de façon opaque.
